# DEMANDE DE BREVET EUROPEEN

(11) **EP 1 217 390 A1**
(43) Date de publication de la demande: **26.06.2002**
(21) Numéro de dépôt: 01403134.8
(22) Date de dépôt: 05.12.2001
(51) Int. Cl.: G01V 1/16, G01V 1/38

(54) **Méthode et dispositif d'exploration sismique d'une zone souterraine immergée, utilisant des récepteurs sismiques couplés avec le fond de l'eau**

(30) Priorité: 15.12.2000 FR 0016536
(71) Demandeur: INSTITUT FRANCAIS DU PETROLE, 92852 Rueil-Malmaison Cedex (FR)
(72) Inventeur: VandenBroucke, Eric, 92000 Nanterre (FR)

(57) **Abrégé**

- Méthode et dispositif d'exploration sismique d'une zone souterraine immergée, utilisant des récepteurs sismiques couplés avec le fond de la masse d'eau.
- On utilise des unités d'acquisition (1) comprenant une flèche (2) où sont localisés des récepteurs sismiques (4), un compartiment de mesure (5) pour l'acquisition et la mémorisation des données reçues par les récepteurs et des moyens de flottaison amovibles et sélectifs (7). Les unités d'acquisition (1) sont mouillées et, par l'effet de la gravité, elles viennent se ficher dans le fond et coupler les récepteurs avec les formations sous-jacentes. On détecte dans un premier temps leurs positions respectives, on réalise des opérations d'acquisition sismique en utilisant une source immergée, de manière à collecter des données sismiques sur la formation et ensuite on actionne les moyens de flottaison (7) pour faire remonter tout ou partie des unités d'acquisition (1) ou bien on fait descendre jusqu'au voisinage des différentes unités un moyen de collecte des données (véhicule ou unité passive de collecte).
- Applications à la prospection ou la surveillance sismique d'un gisement d'hydrocarbures par exemple.

## Description

La présente invention concerne une méthode et un dispositif de prospection ou de surveillance sismique d'une zone souterraine immergée, utilisant des récepteurs sismiques couplés avec le fond de la masse d'eau.

### Présentation de l'état de la technique

Il est connu de réaliser des opérations d'exploration ou de surveillance sismique d'une zone sous-marine, qui comportent la transmission dans la formation souterraine d'ondes sismiques, la réception et l'enregistrement des ondes renvoyées par les discontinuités de la formation au moyen de récepteurs sismiques couplés avec la surface du fond, et traitement des données acquises pour former des images sismiques.

Par les brevets US 4 870 625 ou WO 9923510, on connaît des méthodes de prospection sismique où l'on utilise un câble ou flûte sismique (streamer) dont une première extrémité est reliée en surface à un bateau ou une bouée, assez longue pour que toute une partie vers l'extrémité opposée repose sur le fond marin. Des récepteurs sismiques tels que des géophones ou hydrophones sont associés à cette partie et se trouvent couplés avec le fond. Les récepteurs sont reliés par des lignes intérieures à la flûte, à un équipement d'acquisition en surface

Par les brevets US 4 692 906 ou 5 189 642, il est connu de descendre jusqu'au fond de l'eau des unités sismiques comprenant des récepteurs sismiques destinés à être couplés avec les couches superficielles du fond, un équipement d'électronique pour l'acquisition et l'enregistrement des signaux sismiques captés en réponse à l'activation d'une source sismique remorquée en immersion, et des moyens pour ramener les unités sismiques en surface à la fin des sessions d'exploration.

Par le brevet FR 2 774 775 du demandeur, on connaît également une méthode de prospection ou surveillance sismique d'un gisement sous-marin dans laquelle on descend jusqu'au fond de l'eau une ou plusieurs unités d'émission sismique comprenant une ou plusieurs sources sismiques associées à des moyens d'alimentation en énergie, chacune des ces unités étant reliée à la surface par un ombilical multifonctions. Des récepteurs sismiques peuvent également être couplés avec la surface du fond.

### La méthode et le dispositif selon l'invention

Le dispositif selon l'invention permet l'exploration sismique d'une zone souterraine immergée dans une masse d'eau. Il comporte essentiellement au moins une unité d'acquisition de signaux sismiques comprenant une partie profilée ou flèche pourvue d'un logement pour au moins un récepteur sismique et un module de collecte de données correspondant à des signaux sismiques reçus par les récepteurs, chaque unité d'acquisition étant adaptée à descendre par l'effet de la gravité jusqu'au fond de la masse d'eau et à y pénétrer de façon à coupler les récepteurs sismiques avec la formation souterraine, le dispositif comportant aussi des moyens de positionnement de chaque unité d'acquisition au fond et des moyens de récupération en surface des données sismiques collectées par chaque unité d'acquisition.

Les moyens de positionnement comportent par exemple un transpondeur acoustique associé à chaque unité d'acquisition et un ensemble de télémétrie acoustique associé à une installation de surface pour détecter la position relative de chaque unité d'acquisition, qu'il s'agisse d'un dispositif de positionnement acoustique à base courte associée à un véhicule pourvu de moyens de positionnement par satellite ou encore de plusieurs transpondeurs acoustiques associés à une ou plusieurs bouées en surface pourvues de moyens de positionnement par satellite.

Suivant un mode de réalisation, chaque unité d'acquisition comporte un premier ensemble de transmission des données sismiques acquises, et les moyens de récupération en surface des données sismiques acquises comportent un véhicule muni d'un deuxième ensemble de transmission adapté à communiquer avec le premier ensemble de transmission.

Suivant un autre mode de réalisation, chaque unité d'acquisition comporte un premier ensemble de transmission des données sismiques acquises, les moyens de récupération en surface des données sismiques acquises comportent un appareil de collecte de données muni d'un deuxième ensemble de transmission adapté à communiquer avec le premier ensemble de transmission, cet appareil étant relié par câble avec une installation de surface et amené en immersion à une certaine distance de chaque unité d'acquisition, le temps nécessaire à la transmission des données.

Suivant un autre mode de réalisation, les moyens de récupération des données sismiques comportent des moyens de flottaison amovibles associés à chaque unité d'acquisition, adaptés, sur commande depuis une installation de surface, à ramener en surface une partie au moins de chaque unité d'acquisition, telle que le module de collecte.

Suivant un autre mode de réalisation, chaque unité d'acquisition comporte des éléments de mémorisation pour les données sismiques acquises, et les moyens de flottaison amovibles sont associés aux éléments de mémorisation et adaptés, sur commande depuis une installation de surface, à les ramener en surface

Suivant un autre mode de réalisation, chaque unité d'acquisition comporte un barillet contenant plusieurs cartouches de mémoire pour les données sismiques acquises, et les moyens de flottaison amovibles sont associés à au moins une cartouche de mémoire et adaptés, sur commande depuis une installation de surface, à la ramener en surface.

La méthode selon l'invention comporte :
- la mise en place du dispositif tel que défini ci-dessus ;
- la réalisation d'opérations d'exploration sismique avec émission d'ondes par une source sismique immergée, réception par les récepteurs de chaque unité d'acquisition, des ondes renvoyées par des discontinuités de la formation souterraine en réponse aux ondes émises dans la formation, collecte des données correspondant aux ondes reçues par les récepteurs, et la récupération en surface des données sismiques acquises par chaque unité d'acquisition.

La méthode comporte par exemple :
- l'implantation au fond de la masse d'eau d'au moins une unité d'acquisition de signaux sismiques comprenant une partie profilée ou flèche pourvue d'un logement pour au moins un récepteur sismique et un module de collecte de données correspondant à des signaux sismiques reçus par les récepteurs, chaque unité étant adaptée à descendre par l'effet de la gravité jusqu'au fond de la masse d'eau et à y pénétrer de façon à coupler les récepteurs sismiques avec la formation souterraine ;
- la détermination de la position de chaque unité d'acquisition implantée au fond ;
- la réalisation d'opérations sismiques avec émission d'ondes par une source sismique immergée, réception des ondes renvoyées par des discontinuités de la formation souterraine en réponse aux ondes émises dans la formation, collecte des données reçues par les récepteurs de chaque unité d'acquisition ; et
- la récupération en surface des données sismiques acquises par chaque unité d'acquisition.

La récupération en surface des données sismiques acquises par chaque unité d'acquisition, comporte soit un transfert en surface d'au moins une partie de chaque unité d'acquisition, soit une transmission des données à une installation de surface par l'intermédiaire d'un véhicule ou d'un ensemble passif déplacé jusqu'au voisinage des unités d'acquisition.

La méthode et le dispositif peuvent être appliqués par exemple à la prospection sismique marine, à la prospection sismique marine répétitive d'une formation souterraine en cours d'exploitation, etc.

### Présentation sommaire des figures

D'autres caractéristiques et avantages de la méthode et du dispositif selon l'invention, apparaîtront à la lecture de la description ci-après d'un exemple non limitatif de réalisation, en se référant aux dessins annexés où :
- la Fig.1 montre schématiquement l'agencement d'une unité d'acquisition de fond et la dépose de celle-ci au fond de l'eau par gravité ;
- la Fig.2 montre schématiquement un premier mode de repérage acoustique par un dispositif de positionnement acoustique à base courte porté par un navire, de la position des unités d'acquisition larguées après leur couplage avec le fond de l'eau ;
- la Fig.3 montre schématiquement un deuxième mode de repérage acoustique par des bouées acoustiques à positionnement par GPS ;
- la Fig.4 montre schématiquement un premier mode d'exploration sismique de la zone immergée ;
- la Fig.5 montre schématiquement l'utilisation de bouées gonflables pour récupérer en surface les différentes unités d'acquisition ou seulement leurs modules électroniques ;
- la Fig.6 de bouées gonflables pour récupérer en surface des éléments de mémorisation de données sismiques acquises largués depuis les unités d'acquisition de fond ;
- la fig.7 montre schématiquement l'utilisation d'un robot sous-marin amené successivement au voisinage des différentes unités d'acquisition dans le but de collecter les données sismiques qu'elles ont accumulées ; et
- la fig.8 montre schématiquement l'utilisation d'un dispositif intermédiaire de collecte de données descendu jusqu'au voisinage du fond, et communiquant par ondes modulées avec les différentes unités d'acquisition, dans le but de collecter les données sismiques qui y sont accumulées.

### Description détaillée de la méthode

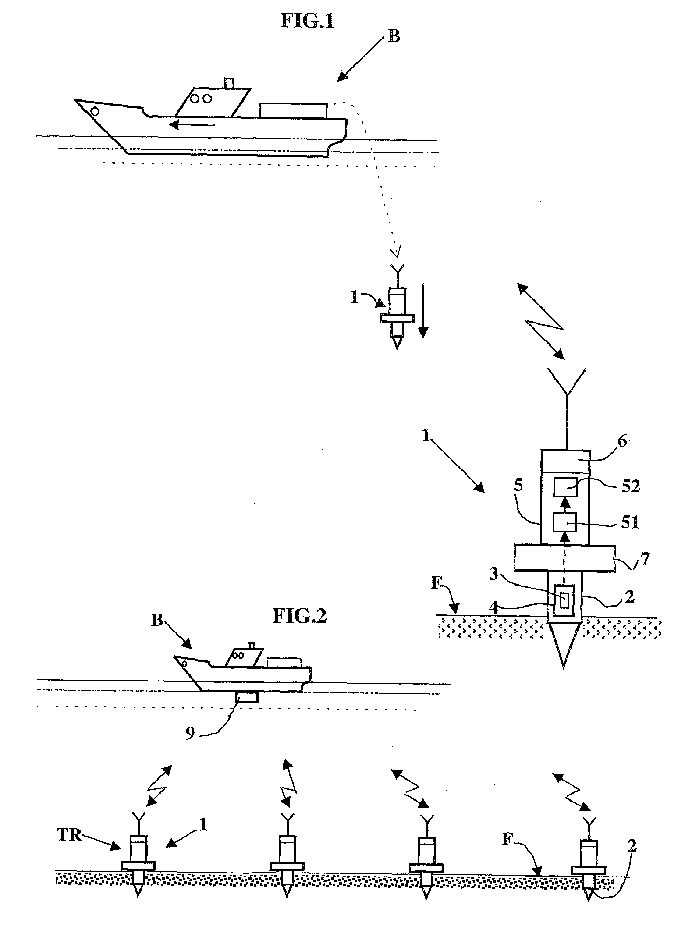

Le système de réception d'ondes sismiques selon l'invention comporte (Fig.1) un ensemble d'unités d'acquisition 1 adaptées à être couplées avec le fond d'une masse d'eau. Chaque unité d'acquisition 1 comporte un corps profilé ou flèche 2 pourvue d'un logement 3 pour un ou plusieurs récepteurs sismiques 4 d'un type quelconque : géophone(s) de type tridimensionnel par exemple (triphone(s)), hydrophone(s), ou autres, un module de collecte de données 5 contenant un module électronique 51 d'acquisition et un module 52 de mémorisation des données sismiques reçues par les récepteurs dans la flèche 2, un dispositif 6 d'émission-réception d'ondes modulées, et des moyens 7 de flottaison largables permettant de faire remonter vers la surface et récupérer tout ou partie de l'unité d'acquisition 1. Les moyens de flottaison largables 7 qui ne sont pas représentés en détail sur la Fig.1, comportent classiquement une ou plusieurs bouées gonflables, des bouteilles d'air comprimé, et un ou plusieurs éléments de connexion amovibles permettant de libérer sur commande la partie de l'équipement de fond que l'on souhaite récupérer.

La structure de chaque module électronique 5 comporte classiquement plusieurs chaînes d'amplification de numérisation et de filtrage et des moyens de multiplexage pour connecter les différentes chaînes à un bloc de mémorisation. Une telle structure est décrite par exemple dans le brevet FR 2 692 384.

Le corps 2 est suffisamment lourd ou lesté pour descendre jusqu'au fond de la masse d'eau et s'y enfoncer, lorsque l'unité d'acquisition est mouillée depuis un navire de surface 8 (Fig.1) et ainsi coupler mécaniquement les récepteurs sismiques avec les terrains sous-jacents.

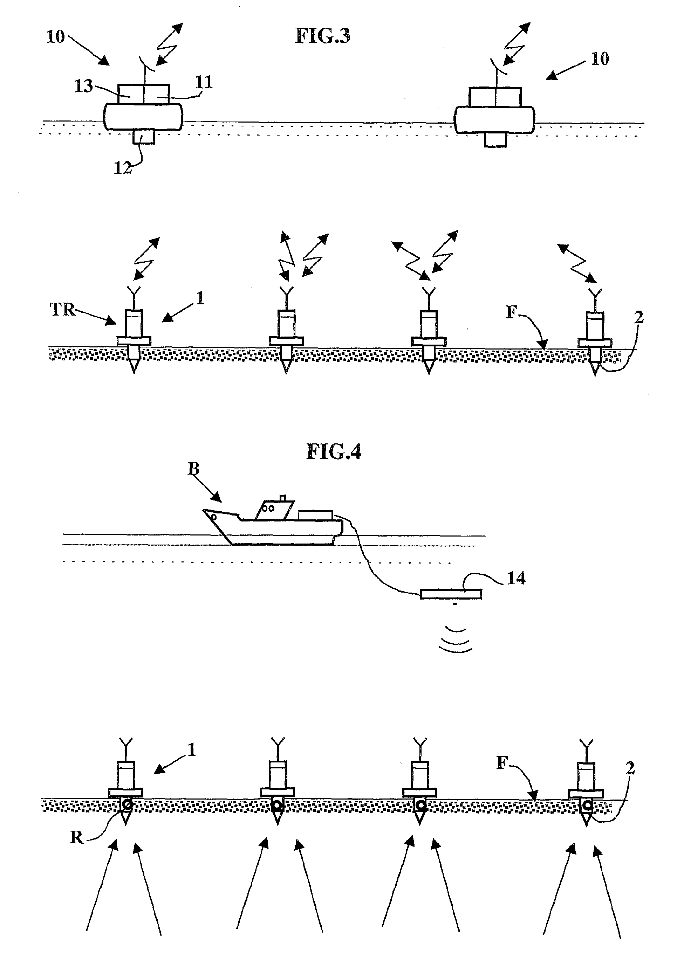

Le dispositif d'émission-réception 6 comporte par exemple (Fig.2, 3) un transpondeur acoustique TR permettant de repérer la position de chaque unité d'acquisition 1 après son ancrage dans le fond. Ce repérage peut être effectué (Fig.2) par un navire de surface pourvu d'un dispositif de positionnement acoustique 9 à base relativement courte de type USBL (pour « Ultra Short Base Line ») par exemple. Le repérage des unités d'acquisition de fond peut également être effectué au moyen d'une base acoustique longue constituée de plusieurs bouées flottantes 10 pourvues chacune d'un ensemble de positionnement de type GPS 11, d'un transpondeur acoustique 12, et d'un module radio 13 pour communiquer avec un poste central sur un navire non représenté. La position des différentes unités d'acquisition 1 au fond de l'eau est calculée en combinant les données de position GPS et celles résultant des mesures de télémétrique acoustique entre les transpondeurs acoustiques 12 sur les bouées 10 et les transpondeurs de fond TR.

Un ensemble d'unités d'acquisition 1 ayant été réparties suivant une ligne ou de préférence suivant plusieurs lignes sensiblement parallèles, on peut procéder à des opérations d'exploration sismique. Une source sismique 14 d'un type connu (canon à air, canon à eau, etc.) remorquée en immersion par un navire B (Fig.4), émet des ondes sismiques. Les ondes renvoyées par les discontinuités du sous-sol marin, en réponse aux ondes acoustiques émises par la source 14, sont reçues par les récepteurs R, et acquises et mémorisées par les différentes unités d'acquisition 1.

Plusieurs modes de récupération des données mémorisées peuvent être utilisés. On peut soit remonter en surface en tout ou en partie les supports d'enregistrement des données des différentes unités d'acquisition 1, soit descendre vers le fond à proximité des différentes unités d'acquisition 1, un moyen de mémorisation auquel les supports d'enregistrement peuvent transférer leurs données par émission d'ondes acoustiques modulées, par exemple.

### Récupération des supports

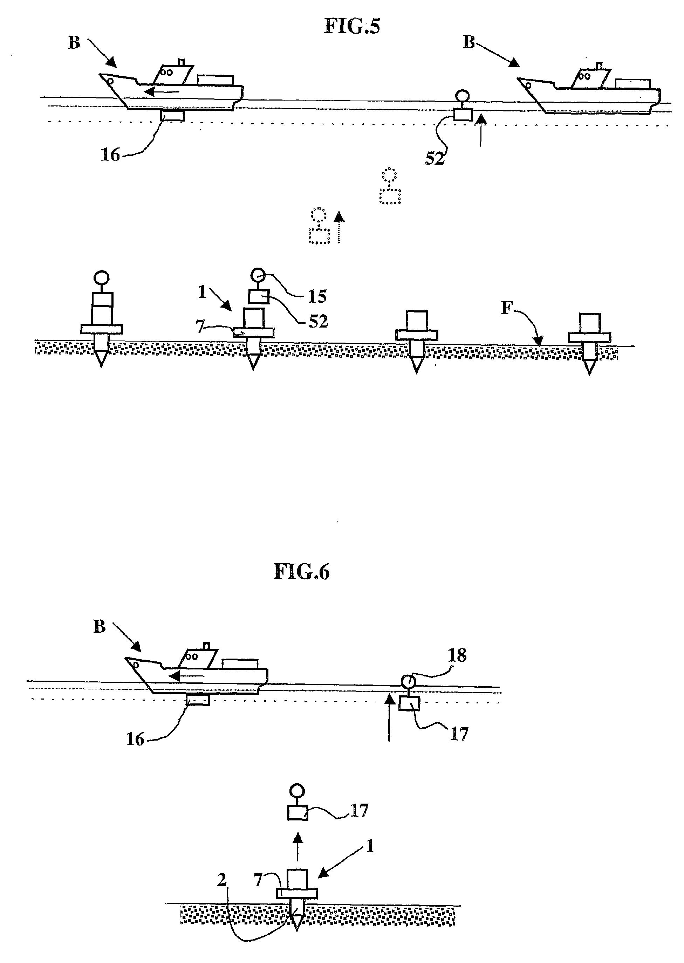

Suivant le mode de mise en oeuvre de la Fig.5, les moyens de flottaison comportent une bouée gonflable 15 associée au module de mémorisation 52 (Fig.1) de chaque unité d'acquisition 1. A la réception par le transpondeur TR, d'un signal de commande issu d'un émetteur acoustique 16 en surface, la bouée 15 est gonflée et déconnectée de l'unité d'acquisition. Le module de mémorisation 52 remonte ainsi en surface où il est récupéré. Ce mode est bien adapté à des opérations d'exploration sismique 3D.

Suivant le mode de mise en oeuvre de la Fig.6, on peut fractionner la récupération des données. Le module de mémorisation 52 comporte un barillet (non représenté) pour plusieurs cartouches de mémoire 17 qui sont successivement chargées avec les données sismiques acquises. Chacune d'elles est associée à une bouée 18. Quand une cartouche est saturée de données, on commande depuis la station centrale en surface, le largage de la bouée correspondante et la connexion d'une autre cartouche du barillet au module d'acquisition. La cartouche libérée est récupérée en surface. Ce mode de mise en oeuvre est bien adapté à des opérations d'exploration ou de surveillance sismique répétitive de type 4D où l'on procède à intervalles de temps déterminés, à la formation d'images sismiques successives d'une même zone de manière à détecter par comparaison les modifications d'état qui y sont intervenues. A chacune des sessions, on charge les données sismiques correspondantes sur une cartouche de mémoire 17 et c'est elle seule que l'on remonte.

### Récupération des données sismiques par transmission

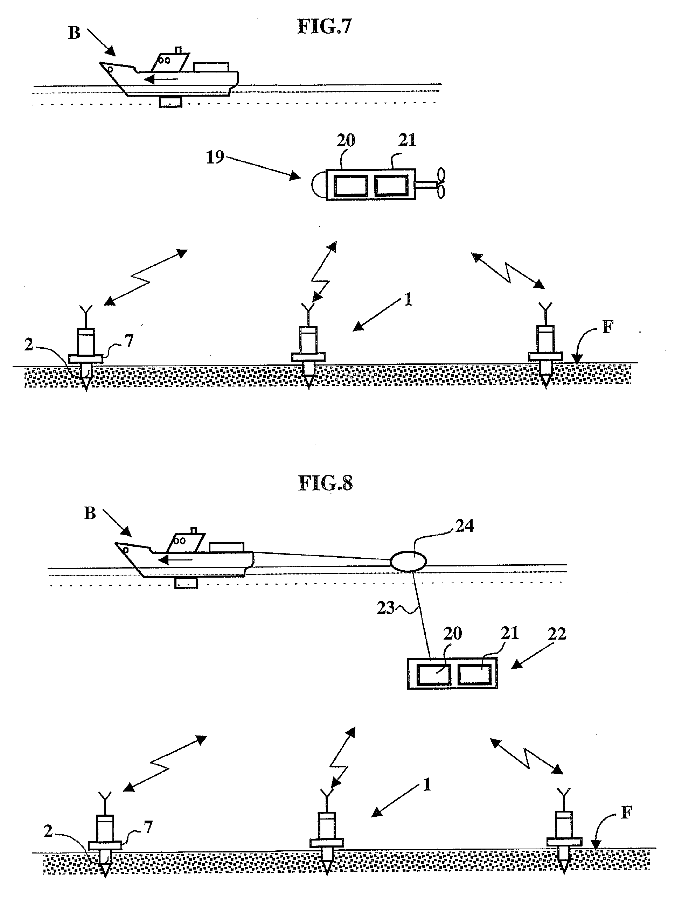

Suivant le mode de mise en oeuvre de la Fig.7, la récupération des données inscrites dans les mémoires des différentes unités d'acquisition 1, est effectuée au moyen d'un véhicule sous-marin 19 de type AUV ou ROV par exemple, qui est descendu jusqu'à proximité des unités d'acquisition 1. Le véhicule est pourvu d'une mémoire de masse 20. Il communique avec chaque unité d'acquisition, par un dispositif 21 d'émission-réception d'ondes modulées acoustiques ou optiques. Sur commande, les unités d'acquisition lui transfèrent successivement le contenu de leurs modules de mémorisation.

Suivant le mode de mise en oeuvre alternatif de la Fig.8, la mémoire de masse 20 ainsi que le dispositif d'émission-réception d'ondes modulées 21 sont placés dans un conteneur 22 descendu jusqu'à proximité du fond, et relié par un câble 23 à une bouée en surface 24. La bouée 24 est reliée à un bateau tracteur B.

## Revendications

1. Dispositif pour l'exploration sismique d'une formation souterraine immergée dans une masse d'eau, comportant au moins une unité (1) d'acquisition de signaux sismiques comprenant une partie pourvue d'un logement (3) pour au moins un récepteur sismique (4), adaptée à réaliser le couplage de celui-ci avec la formation et un ensemble (5) de contrôle et de collecte de données provenant de chaque récepteur sismique, **caractérisé en ce que** chaque unité d'acquisition (1) comporte une flèche (2) agencée pour l'entraîner vers le fond par le seul effet de la gravité jusqu'au fond de la masse d'eau et à y pénétrer de façon à coupler étroitement les récepteurs sismiques avec la formation souterraine, le dispositif comportant aussi des moyens (TR, 9, 10) incluant une base acoustique de référence (9, 10), pour le positionnement acoustique de chaque unité d'acquisition reposant sur le fond, et des moyens acoustiques ou optiques (19, 22) de transmission de données entre chaque unité d'acquisition (1) et un appareil associé à un ensemble de collecte déplaçable.

2. Dispositif selon la revendication 1, **caractérisé en ce que** les moyens de positionnement acoustique comportent un transpondeur acoustique (TR) associé à chaque unité d'acquisition (1), la base acoustique étant une base courte (9) associée à un véhicule (B) pourvu de moyens (GPS) de positionnement par satellite

3. Dispositif selon la revendication 1, **caractérisé en ce que** les moyens de positionnement acoustique comportent un transpondeur acoustique (TR) associé à chaque unité d'acquisition (1), la base acoustique comprenant plusieurs bouées (10) en surface pourvues de moyens (11) de positionnement par satellite, formant une base acoustique longue.

4. Dispositif selon l'une des revendications 1 à 3, **caractérisé en ce que** les moyens (19, 22) de transmission de données comportent un premier ensemble (6) de transmission des données sismiques acquises dans chaque unité d'acquisition (1), l'ensemble de collecte déplaçable comprenant un véhicule (19) pourvu d'un deuxième ensemble (20, 21) de transmission adapté à communiquer avec le premier ensemble de transmission.

5. Dispositif selon l'une des revendications 1 à 3, **caractérisé en ce que** les moyens (19, 22) de transmission de données comportent un premier ensemble (6) de transmission des données sismiques acquises dans chaque unité d'acquisition (1), et un corps (22) incluant un module de collecte de données et un deuxième ensemble de transmission (21) adapté à communiquer avec le premier ensemble de transmission, le corps étant amené en immersion jusqu'à une certaine distance de chaque unité d'acquisition (1), le temps nécessaire à la transmission des données.

6. Dispositif selon l'une des revendications précédentes, **caractérisé en ce qu'**il comporte des moyens de flottaison amovibles (7) associés à chaque unité d'acquisition (1), adaptés, sur commande depuis une installation de surface, à ramener en surface une partie au moins de chaque unité d'acquisition.

7. Méthode d'exploration sismique, **caractérisée en ce qu'**elle comporte
- la mise en place du dispositif tel que défini par l'une quelconque des revendications 1 à 5 ; et
- la réalisation d'opérations d'exploration sismique avec émission d'ondes par une source sismique immergée, réception par les récepteurs sismiques de chaque unité d'acquisition, des ondes renvoyées par des discontinuités de la formation souterraine en réponse aux ondes émises dans la formation, collecte des données reçues par les récepteurs de chaque unité d'acquisition et transmission de données acquises à une installation de surface.

8. Méthode d'exploration sismique, **caractérisée en ce qu'**elle comporte les étapes suivantes :
- la mise à l'eau depuis un véhicule, de différentes unités (1) d'acquisition de signaux sismiques comprenant chacune une flèche (2) pourvue d'un logement pour au moins un récepteur sismique et un ensemble (5) de contrôle et de collecte de signaux sismiques reçus par les récepteurs, la flèche étant agencée pour l'entraîner vers le fond de la masse d'eau par le seul effet de la gravité et à y pénétrer de façon à coupler étroitement les récepteurs sismiques avec la formation souterraine ;
- le positionnement de chacune des unités d'acquisition parvenues au fond par une base acoustique (9, 10) repérée par des moyens de positionnement GPS ; et
- la réalisation d'opérations sismiques avec émission d'ondes par une source sismique immergée, réception des ondes renvoyées par des discontinuités de la formation souterraine en réponse aux ondes émises dans la formation, collecte des données reçues par les récepteurs de chaque unité d'acquisition; et
- récupération des données sismiques acquises par chaque unité d'acquisition, en utilisant des moyens de communication par voie acoustique ou optique (19, 22) pour la transmission de commandes et de données entre chaque unité d'acquisition (1) et un appareil associé à un ensemble de collecte déplaçable.

9. Application de la méthode selon la revendication 7 ou 8, à la prospection sismique marine.

10. Application de la méthode selon la revendication 7 ou 8, à la surveillance sismique marine répétitive d'une formation souterraine en cours d'exploitation.
